# EUROPEAN PATENT APPLICATION

(11) **EP 4 783 546 A2**
(43) Date of publication of application: **29.07.2026**
(21) Application number: 26185074.7
(22) Date of filing: 15.04.2020
(51) Int. Cl.: H04L 65/1016

(54) **METHOD AND APPARATUS FOR RESTORATION OF PROXY CALL SESSION CONTROL FUNCTION**

(30) Priority: 15.05.2019 WO PCT/CN2019/087051
(62) Divisional of application: 20805255.5
(71) Applicant: Telefonaktiebolaget LM Ericsson (publ), 164 83 Stockholm (SE)
(72) Inventor: ZHU, Jinyin, Shanghai (CN); GAN, Juying, Shanghai (CN)
(74) Representative: Ericsson

(57) **Abstract**

Embodiments of the present disclosure relate to methods and network nodes for a restoration of a proxy call session control function, P-CSCF. A first aspect of the present disclosure provides a method performed at a data management node in a communication system, for a terminal device whose communication session has moved from the communication system to another communication system during an interworking procedure. The method comprises: selecting (S103) a session management node in the communication system or another network node in the another communication system for a proxy call session control function, P-CSCF, restoration to provide an internet protocol multimedia subsystem, IMS, service for the terminal device; and sending to the selected node a notification for the P-CSCF restoration.

## Description

### TECHNICAL FIELD

The present disclosure relates generally to the technology of communication system, and in particular, to a method and an apparatus for a restoration of a proxy call session control function, P-CSCF.

### BACKGROUND

This section introduces aspects that may facilitate better understanding of the present disclosure. Accordingly, the statements of this section are to be read in this light and are not to be understood as admissions about what is in the prior art or what is not in the prior art.

In a communication system, a network may provide internet protocol multimedia subsystem, IMS, service to a terminal device, such as a UE. For such IMS service, a P-CSCF is necessary.

When a P-CSCF fails during the service period, a procedure for a restoration of the failed P-CSCF will be needed, to continue the IMS service. A management function/node in the network, such as a unified data management, UDM, may select a network function/node for restoration.

However, when more than one network functions/nodes are capable to implement the restoration, uncertainty may exist. For example, the management function/node does not know to choose which network function/node for restoration, or requests more than one network functions/nodes to implement the restoration at the same time. In such situation, the restoration cannot be implemented properly.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Certain aspects of the present disclosure and their embodiments may provide solutions to these or other challenges. There are, proposed herein, various embodiments which address one or more of the issues disclosed herein. Namely, according to embodiments of the present disclosure, the management function/node in the network may select a proper network function/node for a restoration of P-CSCF from different network functions/nodes.

A first aspect of the present disclosure provides a method performed at a data management node in a communication system, for a terminal device whose communication session has moved from the communication system to another communication system during an interworking procedure, comprising: selecting a session management node in the communication system or another network node in the another communication system for a proxy call session control function, P-CSCF, restoration to provide an internet protocol multimedia subsystem, IMS, service for the terminal device; and sending to the selected node a notification for the P-CSCF restoration.

In embodiments of the present disclosure, the method further comprises: selecting another network node for the restoration of the P-CSCF, if the local policy does not allow to select the session management node.

In embodiments of the present disclosure, the session management node is a combination of a session management function, SMF, and a packet data network gateway control plane entity, PGW-C; and the data management node is a combination of a unified data management, UDM, and a home subscriber server, HSS.

In embodiments of the present disclosure, the another network node is an access and mobility management function, AMF.

In embodiments of the present disclosure, the another network node is in another communication system.

In embodiments of the present disclosure, the another network node is a mobility management entity, MME, in an evolved packet system, EPS, or an Authentication Authorization Accounting, AAA, server.

In embodiments of the present disclosure, the method further comprises: receiving, from the session management node, an indication about whether the communication session associated with the session management node is for the IMS service.

In embodiments of the present disclosure, the indication is received during a registration procedure of the session management node to the data management node.

In embodiments of the present disclosure, the indication is determined by the session management node, based on whether the P-CSCF is allocated to a terminal device during an establishment procedure of the communication session associated with the session management node.

In embodiments of the present disclosure, the communication session comprises: a packet data unit, PDU, session, or a packet data network, PDN, connection.

A second aspect of the present disclosure provides a method performed at a session management node in a communication system for a terminal device whose communication session has moved from the communication system to another communication system during an interworking procedure, comprising: receiving, from a data management node in the communication system, a notification for a proxy call session control function, P-CSCF, restoration to provide an internet protocol multimedia subsystem, IMS, service for the terminal device.

In embodiments of the present disclosure, the method further comprises: transmitting a list of P-CSCF addresses to the terminal device via the another communication system, if the terminal device supports P-CSCF Re-selection; or triggering a deletion procedure for the communication session and requesting UE to reactivate the communication session via the another communication system, if the terminal device does not support P-CSCF Re-selection.

In embodiments of the present disclosure, the session management node is a combination of a session management function, SMF, and a packet data network gateway control plane entity, PGW-C; the data management node is a combination of a unified data management, UDM, and a home subscriber server, HSS; and the communication session is a packet data network, PDN, connection in the another communication system, and is mapped from a packet data unit, PDU, session in a 5GS, during the interworking procedure.

In embodiments of the present disclosure, the another communication system is an evolved packet system, EPS, or an Evolved Packet Core/Evolved Packet Data Gateway system, EPC/ePDG system.

In embodiments of the present disclosure, the EPS comprises: a combination of SMF and PGW-C, a mobility management entity, MME, a serving gateway, SGW; and an Evovled Universal Mobile Telecommunications System Terrestrial Radio Access Network, E-UTRAN; and the EPC/ePDG system comprises: a combination of SMF and PGW-C, Evolved Packet Data Gateway, ePDG, and an untrusted Wireless Fidelity, WiFi, access.

A third aspect of the present disclosure provides a method performed at a session management node, comprising: transmitting, to a data management node, an indication about whether a communication session associated with the session management node is for an internet protocol multimedia subsystem, IMS, service for a terminal device. The session management node and the communication session are selected by the data management for a restoration of a proxy call session control function, P-CSCF, to provide the IMS service for the terminal device, if a local policy of the data management node allows to select the session management node and the communication session is for the IMS service.

In embodiments of the present disclosure, the indication is transmitted during a registration procedure of the session management node to the data management node.

In embodiments of the present disclosure, the indication is determined by the session management node, based on whether the P-CSCF is allocated to the terminal device during an establishment procedure of the communication session.

In embodiments of the present disclosure, the session management node is a combination of a session management function, SMF, and a packet data network gateway control plane entity, PGW-C; and the data management node is a combination of a unified data management, UDM, and a home subscriber server, HSS.

In embodiments of the present disclosure, the communication session comprises: a packet data unit, PDU, session, or a packet data network, PDN, connection.

A fourth aspect of the present disclosure provides an apparatus for a data management node, comprising: a processor; and a memory, containing instructions executable by the processor. The data management node is operative to implement the method according to any of embodiments in the first aspect.

A fifth aspect of the present disclosure provides an apparatus for a session management node, comprising: a processor; and a memory, containing instructions executable by the processor. The session management node is operative to implement the method according to any of embodiments in the second aspect and the third aspect.

A sixth aspect of the present disclosure provides a computer readable storage medium having a computer program stored thereon, the computer program executable by apparatus to cause the apparatus to carry out the method according to any of embodiments in the first to third aspects.

### BRIEF DESCRIPTION OF DRAWINGS

Through the more detailed description of some embodiments of the present disclosure in the accompanying drawings, the above and other objects, features and advantages of the present disclosure will become more apparent, wherein the same reference generally refers to the same components in the embodiments of the present disclosure.
FIG. 1 is an exemplary diagram showing a first procedure of a restoration of P-CSCF;
FIG. 2 is an exemplary diagram showing a second procedure of a restoration of P-CSCF;
FIG. 3 is an exemplary flow chart showing a method performed at a data management node for a restoration of a P-CSCF, according to embodiments of the present disclosure;
FIG. 4 is an exemplary flow chart showing an additional step of the method shown in FIG. 3, according to embodiments of the present disclosure;
FIG. 5 is an exemplary flow chart showing an additional step of the method shown in FIG. 3, according to embodiments of the present disclosure;
FIG. 6 is an exemplary flow chart showing a method performed at a session management node for a restoration of a P-CSCF, according to embodiments of the present disclosure;
FIG. 7 is an exemplary flow chart showing additional steps of the method shown in FIG. 6, according to embodiments of the present disclosure;
FIG. 8 is an exemplary flow chart showing another method performed at a session management node for a restoration of a P-CSCF, according to embodiments of the present disclosure;
FIG. 9 is an exemplary diagram showing a third procedure of a restoration of P-CSCF, according to embodiments of the present disclosure.
FIG. 10 is a block diagram showing apparatuses for network nodes in accordance with embodiments of the present disclosure;
FIG. 11 is a block diagram showing a computer readable storage medium in accordance with embodiments of the present disclosure; and
FIG. 12 is a schematic showing units of the apparatuses for the network nodes, according to embodiments of the present disclosure.

### DETAILED DESCRIPTION

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Reference throughout this specification to features, advantages, or similar language does not imply that all of the features and advantages that may be realized with the present disclosure should be or are in any single embodiment of the disclosure. Rather, language referring to the features and advantages is understood to mean that a specific feature, advantage, or characteristic described in connection with an embodiment is included in at least one embodiment of the present disclosure. Furthermore, the described features, advantages, and characteristics of the disclosure may be combined in any suitable manner in one or more embodiments. One skilled in the relevant art will recognize that the disclosure may be practiced without one or more of the specific features or advantages of a particular embodiment. In other instances, additional features and advantages may be recognized in certain embodiments that may not be present in all embodiments of the disclosure.

As used herein, the term "network", or "communication network/ system" refers to a network/ system following any suitable communication standards, such as new radio (NR), long term evolution (LTE), LTE-Advanced, wideband code division multiple access (WCDMA), highspeed packet access (HSPA), and so on. Furthermore, the communications between a terminal device and a network node in the communication network may be performed according to any suitable generation communication protocols, including, but not limited to, the first generation (1G), the second generation (2G), 2.5G, 2.75G, the third generation (3G), 4G, 4.5G, 5G communication protocols, and/or any other protocols either currently known or to be developed in the future.

The term "function", "node", "network node" or "network side node" refers to a network device/apparatus/entity with accessing capability in a communication network via which a terminal device accesses to the network and receives services therefrom. The node/function may include a base station (BS), an access point (AP), a multi-cell/multicast coordination entity (MCE), a server node/function (such as a service capability server/application server, SCS/AS, group communication service application server, GCS AS, application function, AF), an exposure node (such as a service capability exposure function, SCEF, network exposure function, NEF), a unified data management, UDM, a session management function, SMF, an access and mobility management function, AMF, a controller or any other suitable device in a wireless communication network. The BS may be, for example, a node B (NodeB or NB), an evolved NodeB (eNodeB or eNB), a next generation NodeB (gNodeB or gNB), a remote radio unit (RRU), a radio header (RH), a remote radio head (RRH), a relay, a low power node such as a femto, a pico, and so forth.

Yet further examples of the network node comprise multi-standard radio (MSR) radio equipment such as MSR BSs, network controllers such as radio network controllers (RNCs) or base station controllers (BSCs), base transceiver stations (BTSs), transmission points, transmission nodes, positioning nodes and/or the like. More generally, however, the network node may represent any suitable device (or group of devices) capable, configured, arranged, and/or operable to enable and/or provide a terminal device access to a wireless communication network or to provide some service to a terminal device that has accessed to the wireless communication network.

The term "terminal device" encompasses a device which is able to communicate with a network node/network function, such as a base station, or with another wireless device by transmitting and/or receiving wireless signals. Thus, the term terminal device encompasses, but is not limited to: a mobile phone, a stationary or mobile wireless device for machine-to-machine communication, an integrated or embedded wireless card, an externally plugged in wireless card, a vehicle, etc.

As yet another specific example, in an Internet of things (IoT) scenario, a terminal device may also be called an IoT device and represent a machine or other device that performs monitoring, sensing and/or measurements etc., and transmits the results of such monitoring, sensing and/or measurements etc. to another terminal device and/or a network equipment. The terminal device may in this case be a machine-to-machine (M2M) device, which may in a 3rd generation partnership project (3GPP) context be referred to as a machine-type communication (MTC) device.

As one particular example, the terminal device may be a UE implementing the 3GPP narrow band Internet of things (NB-IoT) standard. Particular examples of such machines or devices are sensors, metering devices such as power meters, industrial machinery, or home or personal appliances, e.g. refrigerators, televisions, personal wearables such as watches etc. In other scenarios, a terminal device may represent a vehicle or other equipment, for example, a medical instrument that is capable of monitoring, sensing and/or reporting etc. on its operational status or other functions associated with its operation.

As used herein, the terms "first", "second" and so forth refer to different elements. The singular forms "a" and "an" are intended to include the plural forms as well, unless the context clearly indicates otherwise. The terms "comprises", "comprising", "has", "having", "includes" and/or "including" as used herein, specify the presence of stated features, elements, and/or components and the like, but do not preclude the presence or addition of one or more other features, elements, components and/or combinations thereof. The term "based on" is to be read as "based at least in part on". The term "one embodiment" and "an embodiment" are to be read as "at least one embodiment". The term "another embodiment" is to be read as "at least one other embodiment". Other definitions, explicit and implicit, may be included below.

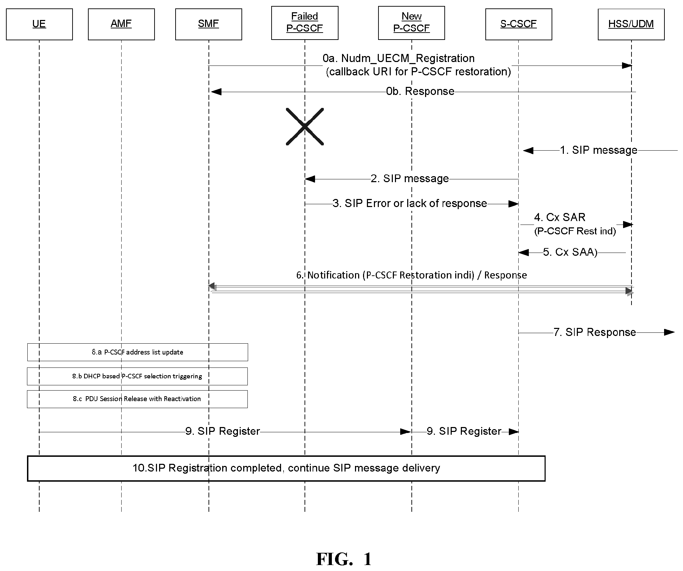

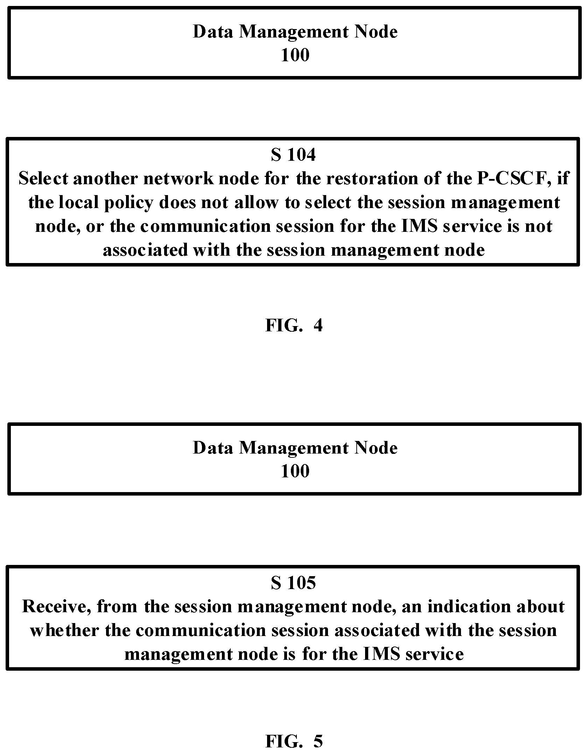

FIG. 1 is an exemplary diagram showing a first procedure of a restoration of P-CSCF. FIG. 1 is the same as the "Figure 5.8.4.2-1: Trigger P-CSCF Restoration Procedure via SMF", in clause 5.8.4.2, in third generation partnership project technical specification, 3GPP TS 23.380 V16.0.0.

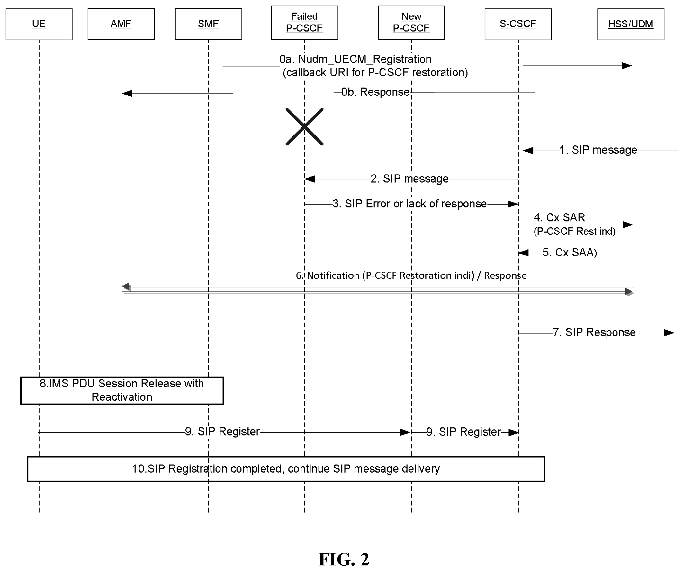

FIG. 2 is an exemplary diagram showing a second procedure of a restoration of P-CSCF. FIG. 2 is the same as the "Figure 5.8.4.3-1: Trigger P-CSCF Restoration Procedure via AMF", in clause 5.8.4.3, in third generation partnership project technical specification, 3GPP TS 23.380 V16.0.0.

As shown in FIG.1 and FIG. 2, a data management node, such as UDM/HSS, or UDM, can trigger the restoration procedure either via SMF or AMF as described in the clause 5.8.4.2, and the clause 5.8.4.3 in the 3GPP TS 23.380 V16.0.0. Such restoration procedure may also be named as UDM/HSS Based P-CSCF Restoration.

However, if both an AMF and a SMF in a 5GS are able to implement the restoration procedure of the P-CSCF, the UDM/HSS will not know how to select one of them, or the UDM/HSS may request both of them to implement the restoration at the same time. In such situation, the restoration cannot be implemented properly.

Further, another network node in another communication system may also be able to implement the P-CSCF Restoration.

For example, 3GPP TS23.502 V16.0.2 has defined that the SMF registers with the UDM over N10 interface for each PDU session using Nudm_UECM_Registration during (1) PDU session establishment procedure (including via Untrusted non-3GPP Access) , and (2) any procedure of mobility from EPS (or EPC/ePDG) to 5GS (or 5^{th} generation core network-Non3GPPInterWorkingFunctin,5GC-N3IWF) which includes EPS to 5GS handover using N26 interface, EPS to 5GS Mobility Registration Procedure using N26 interface, EPS to 5GS Mobility without N26 interface, Handover from EPS to 5GC-N3IWF, Handover from EPC/ePDG to 5GS.

On the other hand, during any procedure of mobility from 5GS (or 5GC-N3IWF) to EPS (or EPC/ePDG), there is no deregistration from SMF+PGW-C towards UDM for the PDU session which implies that the registration information for the SMF and the PDU session ID is kept in UDM and N10 interface is still available for this PDU session.

This includes 5GS to EPS handover using N26 interface, 5GS to EPS Mobility Registration Procedure using N26 interface, 5GS to EPS Mobility without N26 interface, Handover from 5GC-N3IWF to EPS, Handover from 5GS to EPC/ePDG.

After a user equipment, UE, has moved from 5GS (or 5GC-N3IWF) to EPS (or EPC/ePDG), the UDM/HSS Based P-CSCF Restoration will not work properly, with following reasons:
(1) UDM has the registration information from SMF for IMS PDU session and thus can trigger the restoration procedure via SMF. However, the UE is now in EPS (or EPC/ePDG) and the restoration procedure as a whole (i.e., from UDM to SMF and then to MME/SGW or ePDG) is not defined.
(2) Since MME or 3GPP AAA is registered in UDM/HSS, UDM/HSS can trigger the restoration procedure also via MME or 3GPP AAAA which may conflict with the restoration procedure via SMF+PGW-C or may trigger superfluous restoration procedure.

Another problem is that when triggering the restoration procedure via SMF+PGW-C, UDM/HSS may not be able to know to which PDU session to trigger the restoration.

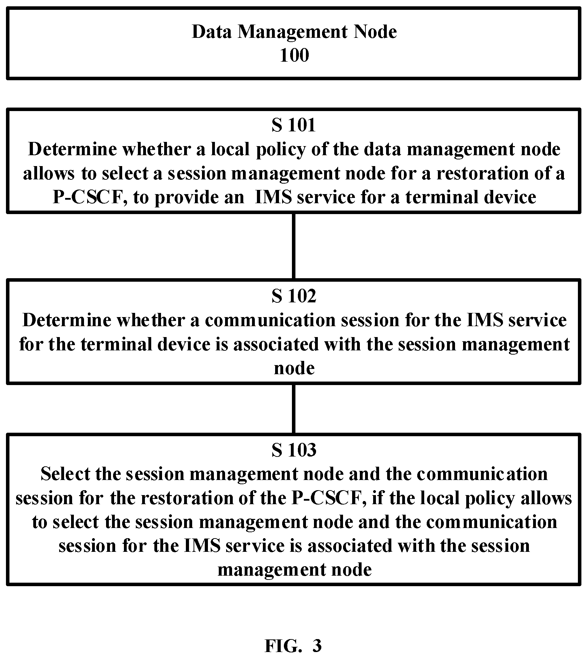

FIG. 3 is an exemplary flow chart showing a method performed at a data management node for a restoration of a P-CSCF, according to embodiments of the present disclosure.

As shown in FIG. 3, the method performed at a data management node 100, comprises: S101, determining whether a local policy of the data management node allows to select a session management node for a restoration of a proxy call session control function, P-CSCF, to provide an internet protocol multimedia subsystem, IMS, service for a terminal device; and S103, selecting the session management node for the restoration of the P-CSCF, if the local policy allows to select the session management node.

Optionally, the method may further comprise: S102, determining whether a communication session for the IMS service for the terminal device is associated with the session management node. And S103 may accordingly comprise: selecting the session management node and the communication session for the restoration of the P-CSCF, if the local policy allows to select the session management node and the communication session for the IMS service is associated with the session management node.

According to embodiments of the present disclosure, a local policy of the data management node, such as the UDM will explicitly indicate which network node is allowed. For example, the local policy may indicate only one specific network node, such as the SMF, or the local policy may indicate a priority order of the SMF higher than the AMF or any other network node. For example, based on the priority order, if both SMF and AMF are able to implement the restoration, the UDM will select the SMF, and if the SMF is not able to implement the restoration, the UDM will try to select another capable network node with relatively higher priority order. It should be understood that another network node may be selected as the only one specific network node for restoration, or having a higher priority than the SMF, alternatively.

Therefore, according to embodiments of the present disclosure, the management function/node in the network may select a proper network function/node for a restoration of P-CSCF from different network functions/nodes.

FIG. 4 is an exemplary flow chart showing an additional step of the method shown in FIG. 3, according to embodiments of the present disclosure.

As shown in FIG. 4, in embodiments of the present disclosure, the method further comprises: S104, selecting another network node for the restoration of the P-CSCF, if the local policy does not allow to select the session management node. Further, when the method comprises step S102, the step S104 may accordingly comprise: selecting another network node for the restoration of the P-CSCF, if the local policy does not allow to select the session management node, or the communication session for the IMS service is not associated with the session management node.

Namely, according to embodiments of the present disclosure, the data management node, such as the UDM may also select the session management node, such as SMF, or another network node, based on whether a communication session for the IMS service for the terminal device is associated with the session management node. If the UDM finds out the communication session for the IMS service is not associated with the SMF, the UDM would not choose the SMF. Another capable network node will be selected properly.

In embodiments of the present disclosure, the session management node is a combination of a session management function, SMF, and a packet data network gateway control plane entity, PGW-C; and the data management node is a combination of a unified data management, UDM, and a home subscriber server, HSS.

In embodiments of the present disclosure, the another network node is an access and mobility management function, AMF; and the communication session for the IMS service is a packet data unit, PDU, session.

According to embodiments of the present disclosure, when the terminal device, such as a UE, utilizes a PDU session for IMS service in a 5GS, the local policy of the UDM may explicitly indicates whether a SMF, or an AMF is allowed to implement the P-CSCF restoration.

In embodiments of the present disclosure, the another network node is in another communication system.

In embodiments of the present disclosure, the another network node is a mobility management entity, MME, in an evolved packet system, EPS, or an Authentication Authorization Accounting, AAA, server; and the communication session is a packet data network, PDN, connection in the evolved packet system, EPS, or an Evolved Packet Core/Evolevd Packet Data Gateway system, EPC/ePDG system.

In embodiments of the present disclosure, the communication session is for the IMS service is moved from a 5GS to another communication system.

According to embodiments of the present disclosure, when the terminal device, such as a UE, may also utilize a PDN connection for IMS service in EPS or EPC/ePDG system. Particularly, the PDN connection may be mapped from a PDU session in a 5GS, during an interworking from the 5GS (or 5GC-N3IWF) to EPS (or EPC/ePDG), and the PDN connection may still be associated with the SMF. The local policy of the UDM may explicitly indicates whether a SMF, or MME in EPS, or AAA server is allowed to implement the P-CSCF restoration.

Namely, in any of the above situations, the data management node will select a network node properly.

FIG. 5 is an exemplary flow chart showing an additional step of the method shown in FIG. 3, according to embodiments of the present disclosure.

In embodiments of the present disclosure, the data management node may obtain information about whether a communication session for the IMS service for the terminal device is associated with the session management node, based on local configuration or storage. Further, the data management node may obtain such information from any other network node, such as the session management node itself.

As shown in FIG. 5, in embodiments of the present disclosure, the method further comprises: S105, receiving, from the session management node, an indication about whether the communication session associated with the session management node is for the IMS service.

With this explicit indication, the data management node may obtain the association between the communication session for IMS service and the session management node quickly and clearly.

In embodiments of the present disclosure, the indication is received during a registration procedure of the session management node to the data management node.

In embodiments of the present disclosure, the indication is determined by the session management node, based on whether the P-CSCF is allocated to a terminal device during an establishment procedure of the communication session associated with the session management node.

For example, during registration procedure from SMF to UDM, SMF indicates whether this PDU session is for IMS service or not based on e.g., whether P-CSCF has been allocated to UE for this PDU session.

Specifically, during PDU session establishment or PDN connection establishment procedure for IMS service, a UE will request network to allocate the P-CSCF address, via Protocol Configuration Options, PCO/ extended Protocol Configuration Options, ePCO in Non-access stratum, NAS, message for 3GPP access, i.e., PDN connectivity Request or PDU session establishment request message; or via notify payload in the Internet Key Exchange v2, IKEv2, message for ePDG access, which will be transferred to Additional Protocol Configuration Options, APCO by ePDG. SMF+PGW-C then will allocate the P-CSCF address to UE.

In embodiments of the present disclosure, the communication session comprises: a packet data unit, PDU, session, or a packet data network, PDN, connection.

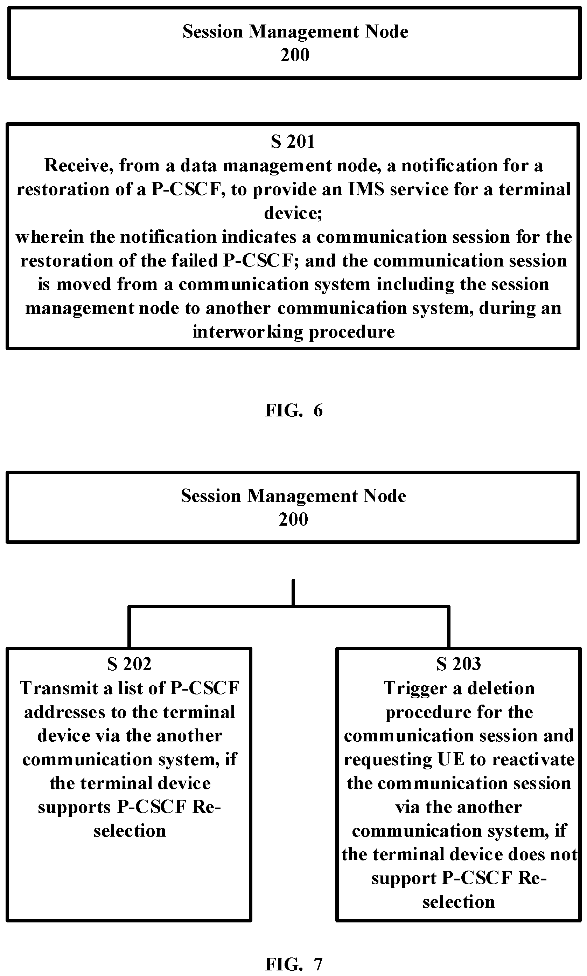

FIG. 6 is an exemplary flow chart showing a method performed at a session management node for a restoration of a P-CSCF, according to embodiments of the present disclosure.

As shown in FIG. 6, a method performed at a session management node 200, comprises: S201, receiving, from a data management node, a notification for a restoration of a proxy call session control function, P-CSCF, to provide an internet protocol multimedia subsystem, IMS, service for a terminal device. The notification indicates a communication session for the restoration of the failed P-CSCF; and the communication session is moved from a communication system including the session management node to another communication system, during an interworking procedure.

According to embodiments of the present disclosure, when a communication session of a terminal device, such as a UE is moved from one communication system to another, the procedure for a session management node to implement P-CSCF restoration is defined explicitly.

FIG. 7 is an exemplary flow chart showing additional steps of the method shown in FIG. 6, according to embodiments of the present disclosure.

As shown in embodiments of the present disclosure, the method further comprises: S202, transmitting a list of P-CSCF addresses to the terminal device via the another communication system, if the terminal device supports P-CSCF Re-selection; or S203, triggering a deletion procedure for the communication session and requesting UE to reactivate the communication session via the another communication system, if the terminal device does not support P-CSCF Re-selection.

For example, if a combination of SMF and PGW-C, SMF+PGW-C, has received the indication of UE's support of "P-CSCF Re-selection support" in the Protocol Configuration Options, PCO, Additional Protocol Configuration Option, APCO or extended protocol configuration options, ePCO information element, IE, SMF+PGW-C triggers the EPS bearer update procedure to sends a new list of P-CSCF address to UE. If SMF+PGW-C has not received the indication of UE's support "P-CSCF Re-selection support" in the PCO, APCO or ePCO IE, SMF+PGW-C triggers the IMS PDN connection deletion procedure and requests UE to reactivate the PDN connection. Further detailed description for 3GPP access is described in step 8a, 8b and 9 of chapter 5.4.3.2 of TS23.380 V16.0.0; further detailed description for ePDG/EPC is described in step 8 of chapter 5.6.2.2 and step 8, 9, 10 of chapter 5.6.5.2 of TS23.380 V16.0.0.

In embodiments of the present disclosure, the session management node is a combination of a session management function, SMF, and a packet data network gateway control plane entity, PGW-C; the data management node is a combination of a unified data management, UDM, and a home subscriber server, HSS; and the communication session is a packet data network, PDN, connection in the another communication system, and is mapped from a packet data unit, PDU, session in a 5GS, during the interworking procedure.

In embodiments of the present disclosure, the another communication system is an evolved packet system, EPS, or an Evolved Packet Core/Evolved Packet Data Gateway system, EPC/ePDG system.

In embodiments of the present disclosure, the EPS comprises: a combination of SMF and PGW-C, a mobility management entity, MME, a serving gateway, SGW; and an Evovled Universal Mobile Telecommunications System Terrestrial Radio Access Network, E-UTRAN; and the EPC/ePDG system comprises: a combination of SMF and PGW-C, Evolved Packet Data Gateway, ePDG, and an untrusted Wireless Fidelity, WiFi, access.

According to embodiments of the present disclosure, when a communication session of a terminal device, such as a UE is moved from one communication system, such as 5GS (or 5GC-N3IWF) to EPS (or EPC/ePDG), the procedure for a session management node to implement P-CSCF restoration is still defined explicitly.

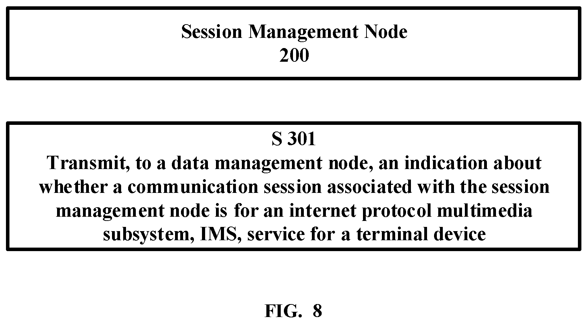

FIG. 8 is an exemplary flow chart showing another method performed at a session management node for a restoration of a P-CSCF, according to embodiments of the present disclosure.

As shown in FIG. 8, a method performed at a session management node comprises: S301, transmitting, to a data management node, an indication about whether a communication session associated with the session management node is for an internet protocol multimedia subsystem, IMS, service for a terminal device. The session management node and the communication session are selected by the data management for a restoration of a proxy call session control function, P-CSCF, to provide the IMS service for the terminal device, if a local policy of the data management node allows to select the session management node and the communication session is for the IMS service.

With this explicit indication, the data management node may obtain the association between the communication session for IMS service and the session management node quickly and clearly.

In embodiments of the present disclosure, the indication is transmitted during a registration procedure of the session management node to the data management node.

In embodiments of the present disclosure, the indication is determined by the session management node, based on whether the P-CSCF is allocated to the terminal device during an establishment procedure of the communication session.

In embodiments of the present disclosure, the session management node is a combination of a session management function, SMF, and a packet data network gateway control plane entity, PGW-C; and the data management node is a combination of a unified data management, UDM, and a home subscriber server, HSS.

In embodiments of the present disclosure, the communication session comprises: a packet data unit, PDU, session, or a packet data network, PDN, connection.

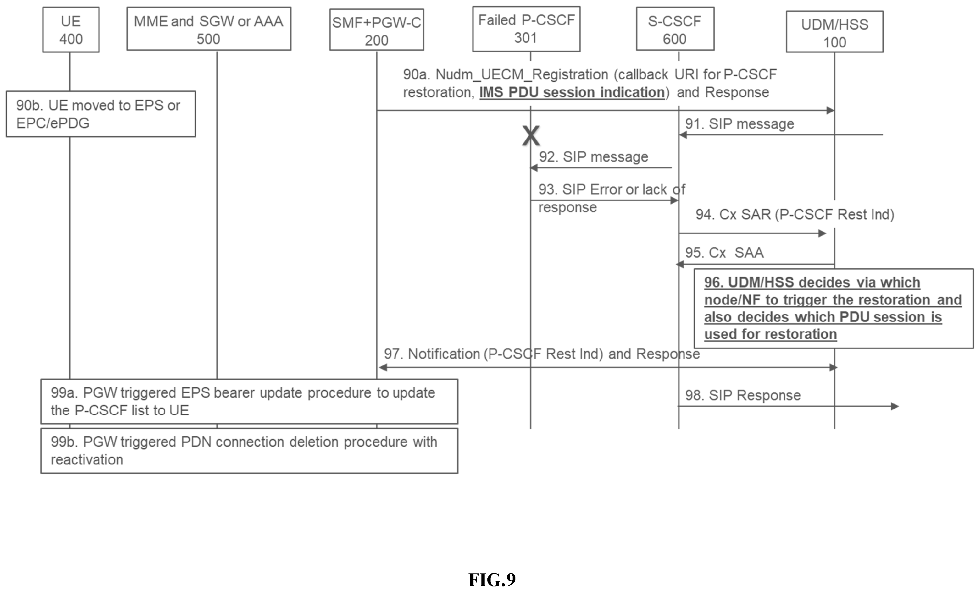

FIG. 9 is an exemplary diagram showing a third procedure of a restoration of P-CSCF, according to embodiments of the present disclosure. In FIG. 9, underlines and bold font are used for emphasizing.

In step 90a: when IMS PDU session is setup in 5GC or is moved from EPS (or EPC/ePDG) to 5GS (or 5GC-N3IWF), SMF 200 registers the IMS PDU session at the UDM/HSS 100. SMF 200 may additionally decides that this PDU session is for IMS service (based on e.g., the P-CSCF address is requested and provided to UE 400) and includes the "IMS PDU session indication" in the Nudm_UECM_Registration essage sent to UDM/HSS 100.

In step 90b: the PDU session of UE 400 is moved to EPS (or EPC/ePDG), to be mapped to a PDN connection.

Steps 91~95 are the same as step 1~5 in Figure 1 (also see chapter 5.8.4.2 of TS23.380 V16.0.0 for the detailed description). Namely, the S-CSCF 600 receives incoming Session Initiation Protocol, SIP, message. If the S-CSCF 600 detects the previous P-CSCF 301 is failed (e.g. due to return SIP error or lack of response), the S-CSCF 600 sends Cx server-assignment-request, SAR, message to the UDM/HSS 100, including P-CSCF restoration indication, and receives a server-assignment-answer, SAA, message.

In step 96, UDM/HSS 100 decides via each which node/NF to trigger the restoration and decides which PDU session should be used for restoration. If the SMF 200 has registered for the IMS PDU session and triggering restoration via SMF 200 is allowed by local policy, UDM/HSS 100 triggers the restoration via SMF 200. Otherwise, UDM/HSS 100 triggers the restoration via other registered nodes, e.g., AMF, MME and/or 3GPP AAA 500. UDM/HSS 100 decides which PDU session should be used for restoration based on the "IMS PDU session indication" received from SMF+PGW-C 200 or based on local configuration per DNN and SNSSAI.

Steps 97~98 are the same as step 6~7 in Figure 1. Namely, in step 97, the UDM 100 sends Nudm_UECM_PCscfRestoration notification to the SMF 200 serving IMS PDU session, using the received callback Uniform Resource Locator, URI, for P-CSCF restoration notifications. The SMF 200 accepts the Nudm message and sends Hyper Text Transfer Protocol, HTTP, response message to the UDM 100. In step 98, The S-CSCF 600 sends a SIP response back to the originating side.

In step 99a: if SMF+PGW-C has received the indication of UE's support of "P-CSCF Re-selection support" in the PCO, APCO or ePCO IE, SMF+PGW-C triggers the EPS bearer update procedure to sends a new list of P-CSCF address to UE.

In step 99b: if SMF+PGW-C has not received the indication of UE's support "P-CSCF Re-selection support" in the PCO, APCO or ePCO IE, SMF+PGW-C triggers the IMS PDN connection deletion procedure and requests UE to reactivate the PDN connection.

Further detailed description of step 99a and 99b for 3GPP access refers to step 8a, 8b and 9 of chapter 5.4.3.2 of TS23.380 V16.0.0; and further detailed description of step 99a and 99b for ePDG/EPC refers to step 8 of chapter 5.6.2.2 and step 8, 9, 10 of chapter 5.6.5.2 of TS23.380 V16.0.0.

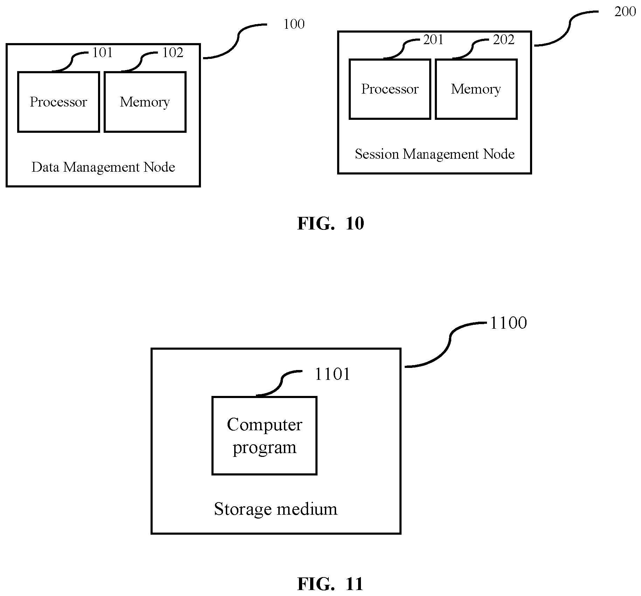

FIG. 10 is a block diagram showing apparatuses for network nodes in accordance with embodiments of the present disclosure.

As shown in FIG. 10, an apparatus for a data management node 100, comprises: a processor 101; and a memory 102, containing instructions executable by the processor 101. The data management node 100 is operative to implement the method according to any of embodiments above mentioned, such as shown in FIG. 3, 4, 5, 9.

As shown in FIG. 10, an apparatus for a session management node 200, comprises: a processor 201; and a memory202, containing instructions executable by the processor 201. The session management node 200 is operative to implement the method according to any of embodiments above mentioned, such as shown in FIG. 6, 7, 8, 9.

The processors 101, 201 may be any kind of processing component, such as one or more microprocessor or microcontrollers, as well as other digital hardware, which may include digital signal processors (DSPs), special-purpose digital logic, and the like. The memories 102, 202 may be any kind of storage component, such as read-only memory (ROM), random-access memory, cache memory, flash memory devices, optical storage devices, etc.

FIG. 11 is a block diagram showing a computer readable storage medium in accordance with embodiments of the present disclosure.

As shown in FIG. 11, a computer readable storage medium 1100 having a computer program 1101 stored thereon, the computer program 1101 is executable by apparatus to cause the apparatus to carry out the method according to any of embodiments above mentioned, such as shown in FIG. 3-9.

The computer readable storage medium 1100 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives.

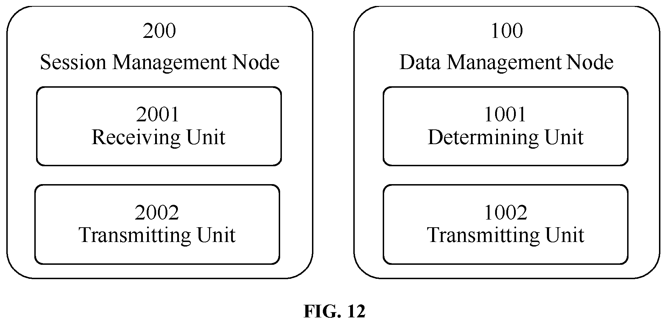

FIG. 12 is a schematic showing units of the apparatuses for the network nodes, according to embodiments of the present disclosure.

As shown in FIG. 12, the apparatuses for a data management node 100 comprises: a determining unit 1001, configured to determine (S101) whether a local policy of the data management node allows to select a session management node for a restoration of a proxy call session control function, P-CSCF, to provide an internet protocol multimedia subsystem, IMS, service for a terminal device; and configured to determine (S102) whether a communication session for the IMS service for the terminal device is associated with the session management node; and a selecting unit 1002, configured to select (S103) the session management node and the communication session for the restoration of the P-CSCF, if the local policy allows to select the session management node and the communication session for the IMS service is associated with the session management node.

The apparatuses for the data management node 100 is further operative to implement the method according to any of embodiments above mentioned, such as shown in FIG. 3, 4, 5, 9.

As shown in FIG. 12, the apparatuses for a session management node 200 comprises: a receiving unit 2001, configured to receive (S201), from a data management node, a notification for a restoration of a proxy call session control function, P-CSCF, to provide an internet protocol multimedia subsystem, IMS, service for a terminal device. The notification indicates a communication session for the restoration of the failed P-CSCF; and the communication session is moved from a communication system including the session management node to another communication system, during an interworking procedure.

The apparatuses for a session management node 200 further comprises: a transmitting unit 2002, configured to transmit (S301), to a data management node, an indication about whether a communication session associated with the session management node is for an internet protocol multimedia subsystem, IMS, service for a terminal device. The session management node and the communication session are selected by the data management for a restoration of a proxy call session control function, P-CSCF, to provide the IMS service for the terminal device, if a local policy of the data management node allows to select the session management node and the communication session is for the IMS service.

The apparatuses for the session management node 200 is further operative to implement the method according to any of embodiments above mentioned, such as shown in FIG. 6, 7, 8, 9.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

With these units, the data management node 100, or session management node 200 may not need a fixed processor or memory, any computing resource and storage resource may be arranged from at least one network node/device/entity/apparatus in the communication system. The virtualization technology and network computing technology may be further introduced, so as to improve the usage efficiency of the network resources and the flexibility of the network.

According to embodiments of the present disclosure, the management function/node in the network may select a proper network function/node for a restoration of P-CSCF from different network functions/nodes.

Further, according to embodiments of the present disclosure, a local policy of the data management node, such as the UDM will explicitly indicates which network node is allowed.

According to embodiments of the present disclosure, when a communication session of a terminal device, such as a UE is moved from one communication system to another, the procedure for a session management node to implement P-CSCF restoration is defined explicitly.

Further, according to embodiments of the present disclosure, with an explicit indication, the data management node may obtain the association between the communication session for IMS service and the session management node quickly and clearly.

In general, the various exemplary embodiments of the present disclosure may be implemented in hardware or special purpose circuits, software, logic or any combination thereof. For example, some aspects may be implemented in hardware, while other aspects may be implemented in firmware or software that may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may include circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by those skilled in the art, the functionality of the program modules may be combined or distributed as desired in various embodiments. In addition, the functionality may be embodied in whole or in part in firmware or hardware equivalents such as integrated circuits, field programmable gate arrays (FPGA), and the like.

The present disclosure includes any novel feature or combination of features disclosed herein either explicitly or any generalization thereof. Various modifications and adaptations to the foregoing exemplary embodiments of this disclosure may become apparent to those skilled in the relevant arts in view of the foregoing description, when read in conjunction with the accompanying drawings. However, any and all modifications will still fall within the scope of the non-limiting and exemplary embodiments of this disclosure.

## Claims

1. A method performed at a data management node in a communication system, for a terminal device whose communication session has moved from the communication system to another communication system during an interworking procedure, comprising:
selecting (S103) a session management node in the communication system or another network node in the another communication system for a proxy call session control function, P-CSCF, restoration to provide an internet protocol multimedia subsystem, IMS, service for the terminal device; and
sending to the selected node a notification for the P-CSCF restoration.

2. The method according to claim 1, wherein
the session management node and the another network node have been registered in the data management node;
the communication system comprises a fifth generation system, 5GS;
the another communication system comprises: an evolved packet system, EPS, or an Evolved Packet Core/Evolved Packet Data Gateway system, EPC/ePDG system;
the session management node is a combination of a session management function, SMF, and a packet data network gateway control plane entity, PGW-C;
the data management node is a combination of a unified data management, UDM, and a home subscriber server, HSS; and/or
the another network node comprises:
an access and mobility management function, AMF;
a mobility management entity, MME, in an evolved packet system, EPS; or
an Authentication Authorization Accounting, AAA, server.

3. The method according to claim 1 or 2, further comprising:
receiving (S105), from the session management node, an indication about whether the communication session is for the IMS service; and optionally
wherein the indication is received during a registration procedure of the session management node to the data management node.

4. The method according to claim 3, wherein the indication is determined by the session management node, based on whether the P-CSCF is allocated to a terminal device during an establishment procedure of the communication session.

5. The method according to any one of claims 1 to 4, wherein the communication session comprises: a packet data unit, PDU, session, or a packet data network, PDN, connection.

6. A method performed at a session management node in a communication system for a terminal device whose communication session has moved from the communication system to another communication system during an interworking procedure, comprising:
receiving (S201), from a data management node in the communication system, a notification for a proxy call session control function, P-CSCF, restoration to provide an internet protocol multimedia subsystem, IMS, service for the terminal device.

7. the method according to claim 6, wherein the session management node has been registered in the data management node.

8. The method according to claim 6 or 7, further comprising:
transmitting (S202) a list of P-CSCF addresses to the terminal device via the another communication system, if the terminal device supports P-CSCF Re-selection; or
triggering (S203) a deletion procedure for the communication session and requesting the terminal device to reactivate the communication session via the another communication system, if the terminal device does not support P-CSCF Re-selection.

9. the method according to any one of claims 6 to 8, wherein
the communication system comprises a fifth generation system, 5GS; and/or
the another communication system comprises: an evolved packet system, EPS, or an Evolved Packet Core/Evolved Packet Data Gateway system, EPC/ePDG system.

10. The method according to any one of claims 6 to 9, wherein
the session management node is a combination of a session management function, SMF, and a packet data network gateway control plane entity, PGW-C;
the data management node is a combination of a unified data management, UDM, and a home subscriber server, HSS;
the EPS comprises: a combination of SMF and PGW-C, a mobility management entity, MME, a serving gateway, SGW; and an Evovled Universal Mobile Telecommunications System Terrestrial Radio Access Network, E-UTRAN;
the EPC/ePDG system comprises: a combination of SMF and PGW-C, Evolved Packet Data Gateway, ePDG, and an untrusted Wireless Fidelity, WiFi, access; and/or
the communication session is a packet data network, PDN, connection in the another communication system, and is mapped from a packet data unit, PDU, session in the communication system, during the interworking procedure.

11. A data management node (100), comprising:
a processor (101); and
a memory (102), containing instructions executable by the processor (101);
wherein the data management node (100) is operative to implement the method according to any of claims 1 to 5.

12. A session management node (200), comprising:
a processor (201); and
a memory (202), containing instructions executable by the processor (201);
wherein the session management node (200) is operative to implement the method according to any of claims 6 to 10.

13. A computer readable storage medium (1100) having a computer program (1101) stored thereon, the computer program (1101) executable by apparatus to cause the apparatus to carry out the method according to any of claims 1 to 10.
